# EUROPÄISCHE PATENTANMELDUNG

(11) **EP 1 136 796 A2**
(43) Veröffentlichungstag der Anmeldung: **26.09.2001**
(21) Anmeldenummer: 01104014.4
(22) Anmeldetag: 20.02.2001
(51) Int. Cl.: G01F 23/296

(54) **Flüssigkeitsspegel-Erfassung mit akustischen Oberflächenwellen**

(30) Priorität: 08.03.2000 DE 10011261
(71) Anmelder: ROBERT BOSCH GMBH, 70442 Stuttgart (DE)
(72) Erfinder: Zabler, Erich, Dr., 76297 Stutensee (DE)

(57) **Zusammenfassung**

Ein Behälter für ein flüssiges Medium, insbesondere ein Tank für ein Kraftfahrzeug, weist mehrere Sensoren 2 auf. Die Sensoren 2 sind in einem unterschiedlichen Abstand vom Boden 3 des Treibstoffbehälters 1 angeordnet. Als Sensoren werden beispielsweise Oberflächenwellen-Bauelemente eingesetzt, die mit Auswertemitteln drahtlos in Verbindung stehen. Die Auswertemittel können aus den Ausgangssignalen der Sensoren 2 auf die Füllstandshöhe im Behälter schließen.

## Beschreibung

### Stand der Technik

Die Erfindung betrifft einen Behälter für ein Medium, insbesondere einen Tank für ein flüssiges Medium, mit wenigstens zwei für das Medium sensitiven Sensoren.

Die Formen von Treibstoffbehältern werden insbesondere bei Personenkraftwagen aus Gründen der Platzersparnis immer komplexer. Durch eine komplexe Form eines Treibstoffbehälters kann zwar erreicht werden, daß der zur Verfügung stehende Raum nahezu optimal ausgenutzt werden kann, jedoch läßt sich durch die komplexe Form des Behälters die sich im Behälter befindliche aktuelle Menge von Treibstoff schlecht feststellen.

Bei bekannten Vorrichtungen zur Feststellung des Inhalts eines Treibstoffbehälters, welche regelmäßig einen Schwimmer aufweisen, mittels welchem beispielsweise ein Potentiometer verändert wird, läßt sich die komplexe Form eines Treibstoffbehälters nur sehr schwer berücksichtigen. Des weiteren haben bei der bekannten Vorrichtung die momentane Beschleunigung sowie die Neigung des Kraftfahrzeuges eine nachteilige Auswirkung auf die korrekte Erfassung des Inhalts des Treibstoffbehälters.

Aus der DE 197 04 683 A1 ist ein Behälter zur Aufnahme von Flüssigkeiten bekannt, welcher wenigstens zwei in einem vorbestimmten gegenseitigen Abstand angeordnete, sich über einen vorbestimmten Bereich von Flüssigkeitsständen erstreckende Sensoren aufweist, deren Ausgangssignale vom jeweiligen Flüssigkeitsstand abhängen. Die Sensoren sind so angeordnet, daß sich ihre Ausgangssignale in Abhängigkeit des Flüssigkeitsstands verändern.

Wegen der begrenzten Größe der Sensoren und des damit zusammenhängenden relativ geringen Arbeitsbereichs der Sensoren läßt sich die bekannte Anordnung zur Erfassung der Flüssigkeitsmenge in einem Behälter nicht verwenden.

Es ist Aufgabe der Erfindung einen eingangs genannten Treibstoffbehälter derart auszubilden, daß sich die aktuelle Menge des sich in ihm befindlichen Treibstoffs auf einfache Weise genau erfassen läßt.

Die Lösung dieser Aufgabe ergibt sich aus den Merkmalen des kennzeichnenden Teils des Anspruchs 1. Vorteilhafte Weiterbildungen der Erfindung ergeben sich aus den Unteransprüchen.

### Vorteile der Erfindung

Gemäß der Erfindung sind mehrere Sensoren vorhanden, welche in einem unterschiedlichen Abstand vom Boden des Behälters angeordnet sind. Durch die Vielzahl der Sensoren läßt sich der Inhalt des Behälters sehr genau feststellen. Die Sensoren können beispielsweise von einem Rechner abgefragt werden, wodurch sich die lokale Höhe des Flüssigkeitsspiegels genau bestimmen läßt. Mittels des Rechners läßt sich auf einfache Weise die Geometrie des Behälters berücksichtigen, so daß der Inhalt des Behälters genau bestimmt werden kann.

Besonders vorteilhaft ist eine Ausführungsform der Erfindung, bei der die Sensoren an unterschiedlichen Stellen über dem Boden des Behälters angeordnet sind. Dadurch, daß sich die Sensoren nicht senkrecht und in gleichem Abstand übereinander befinden, kann der Geometrie des Behälters noch besser Rechnung getragen werden. Insbesondere lassen sich hierdurch bei einem Treibstoffbehälter eines Kraftfahrzeugs Einflüsse, welche beispielsweise von einer Neigung oder einer momentanen Beschleunigung des Kraftfahrzeugs herrühren, auf einfache Weise berücksichtigen. Bei einer Neigung des Kraftfahrzeugs können beispielsweise zwei Sensoren, welche etwa in derselben Höhe über dem Boden des Treibstoffbehälters angeordnet sind, unterschiedliche Signale abgeben. So kann sich bei einer Neigung des Kraftfahrzeugs einer der Sensoren vollständig innerhalb der Flüssigkeit befinden, wohingegen der andere der Sensoren mit der Flüssigkeit nicht in Berührung kommt. Aufgrund eines derartigen Zustands läßt sich im Rechner auf einfache Weise die Neigung des Kraftfahrzeugs berücksichtigen, so daß sich der aktuelle Inhalt des Treibstoffbehälters sehr genau ermitteln läßt.

Als besonders günstig hat sich eine Ausführungsform der Erfindung herausgestellt, bei der die Sensoren an unterschiedlichen Seitenwänden des Behälters angeordnet sind. Hierbei können Sensoren paar- beziehungsweise gruppenweise in derselben Höhe über dem Boden des Treibstoffbehälters angeordnet sein. Neben der hierdurch erreichbaren genauen Bestimmung des Inhalts des Treibstoffbehälters läßt sich eine derartige Ausführungsform besonders robust ausbilden.

Die Sensoren können jedoch auch an einem Peilstab befestigt sein, wie dies in einer weiteren besonderen Ausführungsform der Erfindung vorgesehen ist. Der Peilstab kann hierbei etwa in der Mitte des Behälters senkrecht angeordnet sein, wobei die Sensoren dann etwa senkrecht über dem Boden des Behälters angeordnet sein können. Der Peilstab kann jedoch auch eine beliebig geschwungene Form haben, welche an die Geometrie des Behälters angepaßt ist. Hierbei können die Sensoren dann räumlich an nahezu beliebigen Stellen des Behälters angeordnet sein. Dies wirkt sich sehr vorteilhaft auf die genaue Bestimmung des Inhalts des Behälters aus.

Als besonders vorteilhaft hat sich eine Ausführungsform der Erfindung herausgestellt, bei der die Sensoren flüssigkeitssensitiv sind. Hierbei ist es besonders vorteilhaft, wenn den Sensoren Auswertemittel zugeordnet sind, die mit den Sensoren drahtlos in Verbindung stehen. Als sehr geeignet hat sich erwiesen, als Sensoren Oberflächenwellen(OFW)-Bauelemente zu verwenden, wie dies bei einer weiteren besonderen Ausführungsform der Erfindung vorgesehen ist.

Besonders vorteilhaft bei der Verwendung von OFW-Bauelementen zur Bestimmung des Inhalts beispielsweise eines Treibstoffbehälters ist, daß zu den Sensoren keine elektrische Leitung führen muß. Durch den Wegfall eines zusätzlichen Verkabelungsaufwandes lassen sich OFW-Bauelemente beziehungsweise OFW-Chips in größerer Zahl anbringen. Es ist somit auf einfache Weise möglich, OFW-Bauelemente so anzubringen, daß aus der algorithmischen Verrechnung ihrer Antwortsignale beispielsweise die Kraftfahrzeugneigung und/oder aktuelle Beschleunigung eliminiert werden kann. Auch die Abfrage von Pegelständen von Mehrkammer-Treibstoffbehältern ist problemlos möglich.

Besonders vorteilhaft ist auch eine Vorrichtung zur Füllstandserfassung bei einem der zuvor beschriebenen Behälter, welche dadurch gekennzeichnet ist, daß den Sensoren Auswertemittel zugeordnet sind, die mit den Sensoren drahtlos in Verbindung stehen. Bei einer derartigen Vorrichtung ist es sehr vorteilhaft, wenn die Auswertemittel den Sensoren Abfragesignale übermitteln und die daraufhin von den Sensoren abgegebenen Signale empfangen und auswerten.

Weitere Einzelheiten, Merkmale und Vorteile der vorliegenden Erfindung ergeben sich aus der nachfolgenden Beschreibung eines besonderen Ausführungsbeispiels unter Bezugnahme auf die Zeichnung.

### Zeichnung

Es zeigt
- Fig. 1: eine erste Ausführungsform eines erfindungsgemäß ausgebildeten Treibstoffbehälters,
- Fig. 2: eine zweite Ausführungsform eines erfindungsgemäß ausgebildeten Treibstoffbehälters,
- Fig. 3: eine dritte Ausführungsform eines erfindungsgemäß ausgebildeten Treibstoffbehälters,
- Fig. 4: den prinzipiellen Aufbau eines funkauslesbaren Sensorsystems mit einem Oberflächenwellen-Sensor mit einer Oberflächenwellen-Identifizierungsmarke, ausgeführt als reflektive Verzögerungsleitung.

### Beschreibung von Ausführungsbeispielen

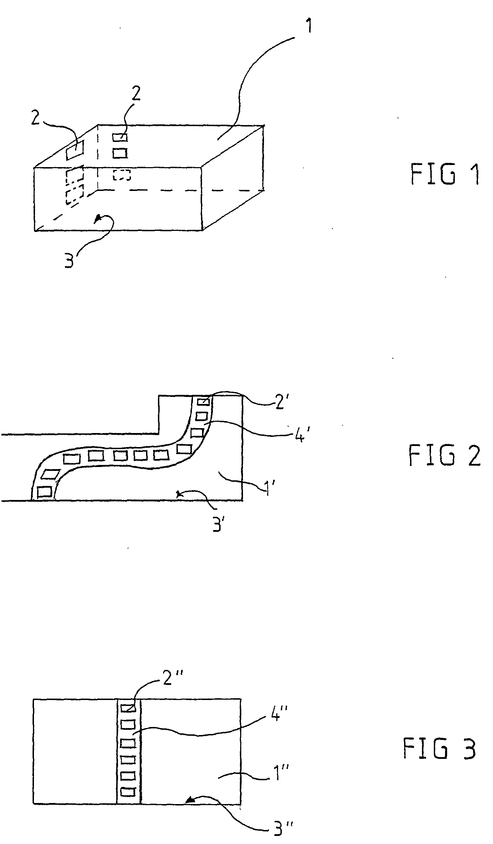

Wie Figur 1 entnommen werden kann, sind in einem rechteckförmig ausgebildeten Behälter 1, welcher ein Treibstoffbehälter eines Kraftfahrzeugs sein kann, Sensoren 2 angeordnet. Die Sensoren 2 sind an zwei Seitenwänden des Behälters 1 jeweils übereinander in einem unterschiedlichen Abstand über dem Boden 3 des Treibstoffbehälters 1 angeordnet. Der Treibstoffbehälter 1 besteht aus Kunststoff. Die Sensoren 2 sind Oberflächenwellen-Bauelemente beziehungsweise Oberflächenwellen-Chips.

Bei einer in Figur 2 dargestellten weiteren besonderen Ausführungsform der Erfindung sind als Oberflächenwellen-Bauelemente ausgebildete Sensoren 2'' auf einem Peilstab 4'' angeordnet. Der Peilstab 4" ist innerhalb eines aus Kunststoff bestehenden Behälters 1' angeordnet und an dessen Geometrie angepaßt. Hierdurch befinden sich die Sensoren 2' einerseits in einem unterschiedlichen Abstand vom Boden 3' des Treibstoffbehälters 1', und andererseits an unterschiedlichen Stellen über dem Boden 3' des Behälters 1'.

Bei einer weiteren in Figur 3 dargestellten Ausführungsform der Erfindung sind als Oberflächenwellen-Bauelemente ausgebildete Sensoren 2'' an einem Peilstab 4'' angeordnet, welcher senkrecht in einem aus Kunststoff bestehenden Behälter 1'' angeordnet ist. Die Sensoren 2'' sind somit in einem unterschiedlichen Abstand vom Boden 3'' des Treibstoffbehälters 1'' angeordnet.

Da die Sensoren 2, 2', 2'' als Oberflächenwellen-Bauelemente (OFW-Bauelemente) ausgebildet sind, kann auf eine Verkabelung der Sensoren 2, 2', 2'' verzichtet werden.

Es hat sich herausgestellt, daß OFW-Bauelemente sehr gut zur Sensierung des Flüssigkeitsstands eines Treibstoffbehälters eines Kraftfahrzeugs geeignet sind. Bei OFW-Bauelementen wird ein extrem kurzer abgestrahlter elektromagnetischer Impuls von einer sehr kleinen auf einem OFW-Chip angebrachten Antenne empfangen und aufgrund einer piezoelektrischen Eigenschaft des Chipmaterials wie beispielsweise Quarz in eine akustische Oberflächenwelle umgewandelt, welche sich auf einer besonders präparierten Laufstrecke des Chips ausbreitet. Der elektromagnetische Impuls wird mit einer hohen Frequenz von beispielsweise einigen hundert Megahertz bis einige Gigahertz abgestrahlt. Die Wellenausbreitung auf dem Chip erfolgt mit einer Ausbreitungsgeschwindigkeit von typisch etwa 3500 Meter pro Sekunde und ist damit wesentlich langsamer als die Ausbreitungsgeschwindigkeit der elektromagnetischen Welle. Hierdurch stellt die akustische Welle auch eine Art Zwischenspeicherung der gesendeten Hochfrequenz-Energie dar.

Bei ihrer Ausbreitung treffen die akustischen Wellen auf speziell positionierte Hindernisse, welche sie teilweise reflektieren, so daß sie zur Antenne zurückkehren und dort nach einer charakteristischen Laufzeit, die von der Position des Hindernisses und der Ausbreitungsgeschwindigkeit abhängt, wieder zurückgestrahlt werden. Durch eine spezielle Anordnung von mehreren Hindernissen wird ein Code von rückgestrahlten Impulsen erzeugt, der eine Identifikation des betreffenden Chips ermöglicht. Neben der Laufzeit können ebenso auch frequenz- und phasenmodulierende Effekte zur Identifikation des Chips eingesetzt werden.

Solchermaßen können von einer zentralen Empfangsanlage auch Signale auseinander gehalten werden, welche von einer Vielzahl von Chips fast gleichzeitig zurückgesendet werden. Auf diese Art läßt sich jedoch nicht nur die Anwesenheit eines bestimmten Chips prüfen. Vielmehr können seine Identifikationssignale auch noch innerhalb bestimmter Grenzen, welche die Identifikation nicht beeinträchtigen, durch spezifische Meßgrößen verändert werden. Zur Verbesserung der Genauigkeit wird bisweilen auf dem Chip eine Referenzstruktur aufgebracht, welche ein von der Meßgröße unbeeinflußtes Signal sendet. Hierdurch können beispielsweise Laufzeiteffekte eliminiert werden, welche durch die Laufzeit zwischen Sender und Chip entstehen.

Es hat sich gezeigt, daß trotz einer sehr dünnen notwendigen Passivierungsschicht eines OFW-Chips eine erhebliche Beeinflussung der Ausbreitungsgeschwindigkeit von Oberflächenwellen durch ein den OFW-Chip umgebendes flüssiges oder gasförmiges Medium besteht. Durch das umgebende flüssige oder gasförmige Medium wird die Ausbreitungsgeschwindigkeit der Wellen verringert.

Zur Verbesserung der Genauigkeit eines derartigen sensitiven Chips kann eine Referenzstrecke auf dem Chip vorgesehen werden, welche beispielsweise durch eine harte Kapselung dem Einfluß des umgebenden Mediums nicht unterliegt.

Besonders vorteilhaft bei der Verwendung von OFW-Bauelementen zur Bestimmung des Inhalts eines Treibstoffbehälters ist, daß zu den Sensoren keine elektrische Leitung führen muß. Durch den Wegfall eines zusätzlichen Verkabelungsaufwandes lassen sich OFW-Bauelemente in größerer Zahl anbringen. Es ist somit auf einfache Weise möglich, OFW-Bauelemente so anzubringen, daß aus der algorithmischen Verrechnung ihrer Antwortsignale beispielsweise die Kraftfahrzeugneigung und/oder aktuelle Beschleunigung eliminiert werden kann. Auch die Abfrage von Pegelständen von Mehrkammer-Treibstoffbehältern ist problemlos möglich.

Voraussetzung für einen zuverlässigen Betrieb von OFW-Bauelementen ist, daß der Treibstoffbehälter aus einem für elektromagnetische Wellen durchlässigen Material wie beispielsweise Kunststoff hergestellt ist. Kann dies nicht realisiert werden, müßte die Antenne des zentralen Abfragegerätes in den Innenraum des zu sensierenden Flüssigkeitsbehälters ragen.

Durch Verwendung von OFW-Bauelementen zur Erfassung des Inhalts eines Treibstoffbehälters ist auf einfache Weise eine genaue Erfassung des Behälterinhalts durch eine Vielzahl von flüssigkeitssensitiven, kostengünstig herstellbaren Sensoren möglich, welche ohne jede Verkabelung abgefragt werden können. Hierdurch lassen sich vor allem Fehlanzeigen durch die Schräglage von Fahrzeugen oder deren momentane Beschleunigung wie beispielsweise Zentrifugalbeschleunigung beim Kurvenfahren eliminieren. Da die Abfrageeinheit in einigen Metern Entfernung zu den OFW-Bauelementen angebracht werden kann, ist beispielsweise ein Einbau im Armaturenbrett problemlos möglich. Hierbei wirkt sich besonders günstig aus, daß auf eine Kabelverbindung zu den Sensoren verzichtet werden kann. Mit der durch die Verwendung von OFW-Bauelementen gewonnenen höheren Genauigkeit bei der Erfassung des Inhalts eines Treibstoffbehälters läßt sich auch die Aussagesicherheit von Bordcomputern verbessern, welche dem betreffenden Fahrer Auskunft geben, über welche Reichweite er beim aktuellen Inhalt des Treibstoffbehälters noch verfügt.

Wenngleich die Erfindung auch anhand eines Treibstoffbehälters für Kraftfahrzeuge beschrieben wurde, so läßt sich die erfindungsgemäße Anordnung selbstverständlich auch anderenorts anwenden.

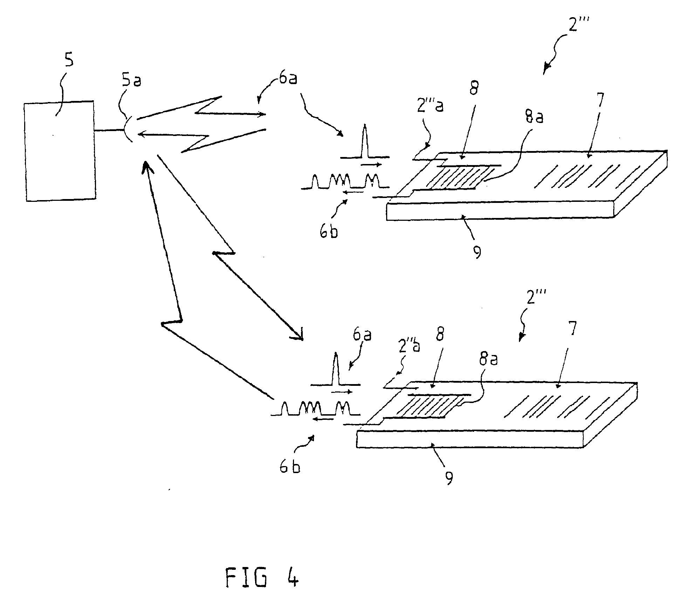

Wie der Figur 4 entnommen werden kann, kann ein erfindungsgemäßes funkauslesbares Sensorsystem aus zwei Sensoren 2''' und einem Abfragegerät 5 bestehen. Da die Sensoren 2''' im wesentlichen identisch ausgebildet sind, wird nachfolgend nur ein Sensor 2''' beschrieben. Der Sensor 2''' weist eine erste Antenne 2a''' auf. Das Abfragegerät 5 weist eine zweite Antenne 5a auf. Vom Abfragegerät 5 wird über die zweite Antenne 5a ein Abfragesignal 6a ausgesandt, welches über die erste Antenne 2a''' vom Sensor 2''' empfangen wird. Der Sensor 2''' sendet in Abhängigkeit seines Zustands ein Sensorsignal 6b aus, welches über die zweite Antenne 5a vom Abfragegerät 5 empfangen und in diesem ausgewertet wird. Teil der Auswertung ist insbesondere die Erkennung, welchem Sensor das empfangene Sensorsignal zuzuordnen ist.

Der als OFW-Bauelement ausgebildete Sensor 2''' speichert auf Grund von Laufzeiten kurzzeitig die vom Abfragegerät 5 ausgesandten Abfragesignale, bis alle Umgebungsechos abgeklungen sind. Dann wird ein charakteristisches Antwortmuster des Transponders zum Abfragegerät zurückgestrahlt. Identifikationsmarken antworten entsprechend einem ihnen zugeordneten konstanten Identifikationsmuster. Durch die im Behälter vorhandene Flüssigkeit werden die Ausbreitungseigenschaften der Oberflächenwellen beeinflußt, wodurch sich das Antwortmuster verändert.

Der vom Abfragegerät 5 ausgesandte elektromagnetische Hochfrequenzimpuls wird von der Antenne 2a''' des Sensors 2''' empfangen und durch einen Wandler 8 in eine sich ausbreitende mechanische Oberflächenwelle umgewandelt. In den Strahlengang dieser Oberflächenwelle sind teilreflektierende Strukturen 8a in einer charakteristischen Reihenfolge eingebracht. Diese Reflektoren 8a sind in Figur 4 als einfache Balken skizziert. Aus einem einzelnen Abfrageimpuls 6a entsteht so eine Vielzahl von Impulsen, die zum Wandler 8 zurückreflektiert werden. Dort werden sie wieder in elektromegnetische Wellen gewandelt und von der Antenne 2a''' als Antwortsignal 6b abgestrahlt. Das Antwortsignal 6b enthält Informationen über die Anzahl und Lage der Reflektoren, deren Reflexionsfaktor, sowie die Ausbreitungsgeschwindigkeit der akustischen Welle. Das Antwortsignal wird vom Abfragegerät 5 empfangen und ausgewertet.

Die Ausbreitungsgeschwindigkeit einer akustischen Oberflächenwelle beträgt typischer Weise nur 3500 Meter pro Sekunde. Dadurch bieten akustische Oberflächenwellen-Bauelemente eine vorzügliche Möglichkeit, einen Hochfrequenzimpuls auf einem kleinen Chip solange zu speichern, bis die elektromagnetische Umgebungsechos abgeklungen sind.

Da eine Abfrage nur wenige Mikrosekunden dauert sind bis 100.000 Abfragen pro Sekunde möglich.

Durch eine auf das Oberflächen-Bauelement 2''' einwirkende Flüssigkeit, ändert sich die Ausbreitungsgeschwindigkeit der Oberflächenwelle. Die Veränderung der Ausbreitungsgeschwindigkeit der Oberflächenwelle läßt sich im Abfragegerät 5 zur Bestimmung des Füllstands im Behälter auswerten.

## Patentansprüche

1. Behälter (1, 1', 1'') für ein Medium, insbesondere Tank für ein flüssiges Medium, mit wenigstens zwei für das Medium sensitiven Sensoren (2, 2', 2''),
**dadurch gekennzeichnet,**
**daß** die Sensoren (2, 2', 2'') in einem unterschiedlichen Abstand vom Boden (3, 3', 3'') des Behälters (1, 1', 1'') angeordnet sind.

2. Behälter nach Anspruch 1,
**dadurch gekennzeichnet,**
**daß** die Sensoren (2, 2') an unterschiedlichen Stellen über dem Boden (3, 3') des Behälters (1, 1') angeordnet sind.

3. Behälter nach Anspruch 1 oder 2,
**dadurch gekennzeichnet,**
**daß** die Sensoren (2) an unterschiedlichen Seitenwänden des Behälters (1) angeordnet sind.

4. Behälter nach Anspruch 1,
**dadurch gekennzeichnet,**
**daß** die Sensoren (2', 2'') an einem Peilstab (4', 4'') befestigt sind.

5. Behälter nach einem der Ansprüche 1 bis 4,
**dadurch gekennzeichnet,**
**daß** die Sensoren (2, 2', 2'') flüssigkeitssensitiv sind und der Behälter ein Tank für ein Kraftfahrzeug ist.

6. Behälter nach einem der vorhergehenden Ansprüche,
**dadurch gekennzeichnet,**
**daß** den Sensoren (1, 1', 1'') Auswertemittel zugeordnet sind, die mit den Sensoren (1, 1', 1'') drahtlos in Verbindung stehen.

7. Behälter nach einem der vorhergehenden Ansprüche,
**dadurch gekennzeichnet,**
**daß** die Sensoren (2, 2', 2'') Oberflächenwellen(OFW)-Bauelemente sind und der Behälter aus einem für elektromagnetische Wellen durchlässigen Material besteht.

8. Vorrichtung zur Füllstandserfassung bei einem Behälter nach einem der Ansprüche 1 bis 7,
**dadurch gekennzeichnet,**
**daß** den Sensoren (1, 1', 1'') Auswertemittel zugeordnet sind, die mit den Sensoren (1, 1', 1'') drahtlos in Verbindung stehen.

9. Vorrichtung zur Füllstandserfassung nach Anspruch 8,
**dadurch gekennzeichnet,**
**daß** die Auswertemittel den Sensoren (1, 1', 1'') Abfragesignale übermitteln und die daraufhin von den Sensoren (1, 1', 1'') abgegebenen Signale empfangen und auswerten.
